# EUROPEAN PATENT APPLICATION

(11) **EP 1 215 924 A2**
(43) Date of publication of application: **19.06.2002**
(21) Application number: 01310505.1
(22) Date of filing: 17.12.2001
(51) Int. Cl.: H04Q 3/00

(54) **System and method for verifying usage and quality of interconnection services for a communication network**

(30) Priority: 18.12.2000 US 740047
(71) Applicant: Inet Technologies, Inc., Richardson, TX 75081 (US)
(72) Inventor: Brehm, Grant M., McKinney, Texas 75050 (US); Patterson, Tim K., Allen, Texas 75013 (US); Keough, Kevin, Aubrey, Texas 76227 (US)
(74) Representative: Jackson, Richard Eric

(57) **Abstract**

A system and method are disclosed which capture signaling data from a signaling network, such as Signaling System Seven, and utilize such captured data to provide information about interconnection services provided in a communication network. More specifically, in a preferred embodiment, monitors capture signaling data from links within a signaling network and correlate the messages into call or transaction records for further processing. For example, in a preferred embodiment, monitors utilize the captured messages to generate call detail record (CDR) data and usage detail record (UDR) data. The generated CDR/UDR data is communicated from the monitors to an "interconnection analysis server." In a preferred embodiment, one or more applications execute on the IA server to collect information about interconnection services, such as usage amount and quality of interconnection services. Thereafter, a service provider may verify the usage and quality of interconnection services via the IA server.

## Description

### RELATED APPLICATIONS

This application is related to co-pending and commonly assigned U.S. Patent Application Serial Numbers 09/092,256, entitled "SYSTEM AND METHOD FOR GENERATING QUALITY OF SERVICE STATISTICS FOR AN INTERNATIONAL COMMUNICATIONS NETWORK" filed June 5, 1998; 09/092,428, entitled "SYSTEM AND METHOD FOR DETECTING HIGH MESSAGE TRAFFIC LEVELS IN A COMMUNICATIONS NETWORK" filed June 5, 1998; 09/092,699, entitled "SYSTEM AND METHOD FOR SIGNAL UNIT DATA STORAGE AND POST CAPTURE CALL TRACE IN A COMMUNICATIONS NETWORK" filed June 5, 1998; 09/092,771, entitled "SYSTEM AND METHOD FOR CORRELATING TRANSACTION MESSAGES IN A COMMUNICATIONS NETWORK" filed June 5, 1998; 09/093,824, entitled "TRANSACTION CONTROL APPLICATION PART (TCAP) CALL DETAIL RECORD GENERATION IN A COMMUNICATIONS NETWORK" filed June 8, 1998; 09/093,955, entitled "SYSTEM AND METHOD FOR MONITORING SERVICE QUALITY IN A COMMUNICATIONS NETWORK" filed June 8, 1998; and 09/156,328, entitled "SYSTEM AND METHOD FOR MONITORING LINK STATUS IN A COMMUNICATION NETWORK" filed September 18, 1998; the disclosures of which are hereby incorporated herein by reference.

### TECHNICAL FIELD

The present invention is related in general to communication networks and in specific to a method and system for verifying usage and quality of interconnection services provided between two or more communication networks.

### BACKGROUND

Common channel signaling networks, such as the Signaling System Seven (SS7) based signal system, use dedicated channels to pass digital messages between systems for call setup, call control, call routing, and other functions. These dedicated signaling channels are part of a network that is separate from the network that carries the actual voice and data signals. An SS7 network is a separate switching system which is used prior to, during, and at the end of an actual voice or data call. The SS7 network is used to route control information. Whenever two switches or elements have to pass call control information during or prior to a phone call, they pass this data via the SS7 signaling network.

There are three basic types of network node elements in an SS7 network. One of them is the Service Switching Point (SSP), which may be a central office switch, a tandem switch or an end office switch. A second principal node element is the Service Control Point (SCP). An SCP acts as a database query server for the rest of the network. An SCP is used in such applications as translating ported telephone numbers, routing 800 calls, tracking roamers in a cellular network, and Alternate Billing Service/Line Identification Database services (or ABS/LIDB) which provide operator-type services. The third principal node element is the Signal Transfer point (STP). An STP is essentially a packet switch that routes the messages from SSPs and SCPs to SSPs and SCPs.

It is possible to combine these three different types of nodes into a single node. However, in North America, they are typically not combined. An SSP performs only switch functions, an SCP only control functions, and an STP only signal transfer functions. In European telecommunications systems, all of these different functions may be combined into one node.

The SS7 network carries a great deal of information and is extremely critical to the operation of the phone system. If an SS7 network is not functioning, or if portions of it are not operating, the phone system simply cannot deliver phone calls, even though all of the voice circuits are operating properly. The capacity and complexity of the SS7 network is small in terms of circuitry and bandwidth utilized by an end user compared to previous voice and data networks. The circuitry of the SS7 network is therefore much more critical. The actual elements in the SS7 network do not provide all the information required in network operations to manage and to determine the health and state of an SS7 network. It is therefore necessary for the telephone industry to deploy surveillance equipment to monitor the links connecting the nodes of the SS7 network.

The topology of the network is such that STPs are typically deployed in a mated pair configuration at geographically separate locations. Connected to a mated pair of STPs will be a set of SSPs and SCPs. This conglomeration of SSPs, SCPs and mated Pair STPs is called a cluster. Clusters are then connected by D-Quad links between STP mated pairs. Of course, the mated pair configuration system is not required and it is not used in all communications systems capable of employing the present invention.

When any transaction or message is sent between two different devices on the network, it is often the case that the messages going from switch A to switch B travel one route on the network while the messages going from switch B to switch A travel a different route. The network surveillance equipment that monitors the link is designed to capture and correlate as much signaling information as possible regardless of network activity. Because of the different data paths that messages may take, it is difficult to do this correlation above what is called the transport layer when monitoring links at the STP sites. An example of an application level problem would be where a subscriber has a problem getting his/her calls delivered. The telephone company may attempt to fix the problem by doing a trace of all data pertaining to that subscriber's phone number, but the data may not all be located at one point. The data may be all in one STP, or split in some fashion, partially in one STP and partially in the other STP of a mated pair, which may be in a different city many miles away.

Systems are known in the prior art which allow for monitoring a signaling network such as an SS7 network. For example, systems are known in the prior art that allow for detecting, capturing, and correlating signals within an SS7 network in order to generate call detail record (CDR) data and usage detail record (UDR) data. Examples of such systems having various features and enhancements are disclosed in U.S. Patent No. 5,592,530 and the patent applications incorporated herein by reference.

Situations commonly arise in which a carrier (or network service provider) interconnects with another carrier to provide a desired network service. That is, one network carrier may be required to interconnect with one or more other carriers in order to provide a desired network service to a user. Interconnecting carrier(s) generally charge a fee for the usage of their network resources in providing interconnection services. However, as discussed in greater detail below, prior art systems typically provide no method for a carrier to verify the amount of network resources of interconnecting carriers actually utilized for interconnection. Additionally, prior art systems typically provide no method for a carrier to evaluate the quality of interconnecting services provided by an interconnecting carrier.

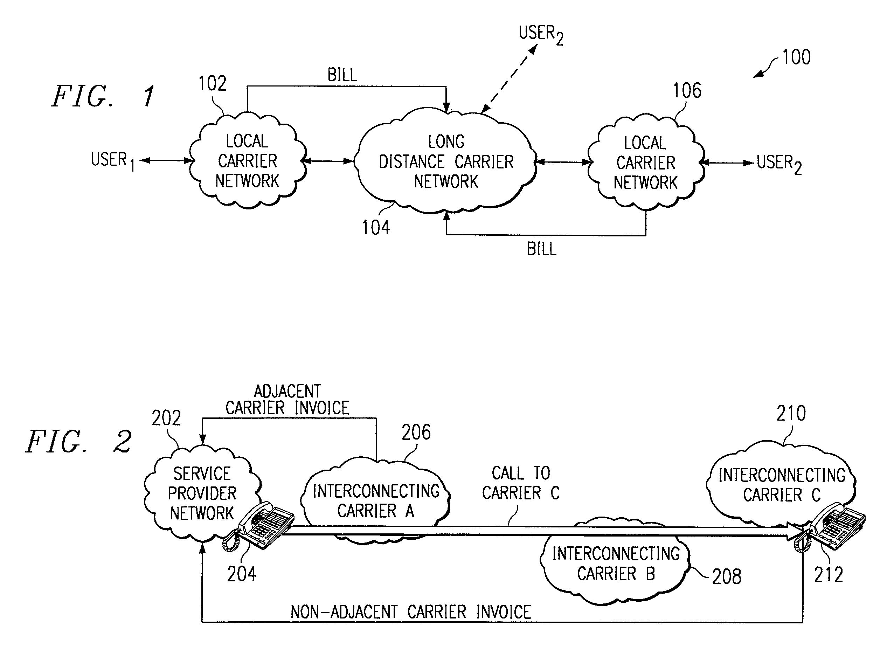

FIG. 1 illustrates an example of a common scenario requiring interconnection between multiple carriers. As shown, User₁ desires to communicate with User₂ via one or more communication networks. For example, suppose that User₁ is attempting to place a long-distance telephone call to User₂. Because the telephone call is a long-distance call, User₁'s long-distance carrier 104 will be utilized to provide the communication service. However, an interconnecting carrier may be required to connect Users to the long-distance carrier network 104. For example, a local carrier network 102 (local to User₁) may be accessed to connect User₁ to long-distance carrier network 104. For instance, a switch within local carrier network 102 may be utilized to connect User₁ to a switch within long-distance carrier network 104. Long-distance carrier network 104 may then connect User₁ to User₂. However, as further shown in FIG. 1, a further interconnecting carrier may be required for long-distance carrier network 104 to complete the call to User₂. For example, a local carrier network 106 (local to User₂) may be accessed to interconnect long-distance carrier network 104 to User₂. For instance, a switch within local carrier network 106 may be utilized to connect User₂ to a switch within long-distance carrier network 104, thereby allowing long-distance carrier network 104 to provide communication between User₁ and User₂.

In the above example, local carrier 102 and local carrier 106 may charge long-distance carrier 104 a fee (or bill) for the interconnection services provided. That is, because long-distance carrier network 104 utilized network resources from local carrier network 102 and local carrier network 106 for interconnection, long-distance carrier 104 is typically charged a usage fee from these interconnecting carriers. Of course, while the above example describes interconnecting telephone networks to provide desired telephony services, interconnection of any other types of communication networks may be required to provide a particular type of communication service. For instance, in order for a user to access a desired computer server via a communication network, one or more interconnections may be required. Accordingly, it should be understood any of various types of networks may require interconnection service, such as a public switched telephone network (PSTN), wireline network, wireless network, general purpose processor-based information network, cable network, wide area network (WAN), the Internet, or any combination thereof suitable for providing information communication between particular network elements (e.g., users or devices communicatively coupled to such network).

As discussed above, interconnecting carriers typically charge a usage fee for interconnection services. However, prior art systems typically provide no method for a service provider to verify the amount of network resources utilized for interconnection by interconnecting carriers. That is, service providers, such as long-distance carrier 104 in the above example, typically have no method of accurately verifying the amount of interconnection services actually used. For instance, in the above example, long-distance carrier 104 typically has no method of verifying the amount of usage of local carrier network 102 and local carrier network 106 actually utilized for interconnection. Thus, for example, long-distance carrier 104 may receive a bill (or invoice) from local carrier network 102 for X minutes of usage for interconnection services, and may receive a bill (or invoice) from local carrier network 106 for Y minutes of usage for interconnection services; and long-distance carrier 104 has no way of verifying the billed usage amount (e.g., X and Y minutes) of such interconnecting carrier networks is accurate. While the usage required for each interconnection may be relatively small (e.g., only a few seconds may be required for a local telephone carrier to interconnect a caller to a long-distance carrier's network), the sum total of many interconnection charges incurred over a period of time may become significantly large. Therefore, a desire exists for a system and method that allows a service provider to verify the accuracy of interconnection charges.

Additionally, prior art systems typically provide no method for a service provider to evaluate the quality of interconnection services provided by an interconnecting carrier. For example, a service provider may desire to monitor the amount of time required for interconnection by an interconnecting carrier, the number of dropped calls by an interconnecting carrier, the number of busy signals (e.g., "all circuits are busy"), the clarity of the interconnecting carrier's network (e.g., whether a "fuzzy" connection is achieved), etcetera. In most instances, a user will associate the quality of services received with the service provider, rather than with an interconnecting carrier. For example, in the above example, User₁ will likely associate the quality of the telephony services provided with long-distance carrier 104, rather than interconnecting carrier's 102 and 106. Therefore, long-distance carrier 104 may desire to monitor the quality of services provided by such interconnecting carriers. Furthermore, a service provider may desire that certain aspects of interconnection services be of a desired "quality" irrespective of whether the "quality" is recognizable by the users (e.g., the amount of time required for interconnection). A service provider may desire to monitor the quality of interconnection services in order to evaluate the reasonableness of the fees (or bills) that the service provider was charged for such interconnection services, as an example. As another example, a service provider may use such information in order to intelligently select interconnection carriers to utilize in the future. In prior art systems, service providers typically have no method of monitoring the quality of interconnection services provided by interconnecting carriers. Therefore, a desire exists for a system and method that allows a service provider to verify/monitor the quality of interconnection services provided by interconnection carriers.

### SUMMARY OF THE INVENTION

The present invention is directed to a system and method which monitor a communication network, capture signaling data from a signaling network, such as message signal units (MSUs), and utilize such captured data to provide information about interconnection services provided in a communication network. More specifically, in a preferred embodiment, monitors capture signaling data from links within a signaling network, such as Signaling System Seven, and correlate the data into call or transaction records for further processing. For example, in a preferred embodiment, monitors utilize the captured data to generate call detail record (CDR) data and usage detail record (UDR) data. Preferably, the monitors have a plurality of processors for processing the captured signaling data. The processors may run any of a number of message or record processing applications.

In a preferred embodiment, the generated CDR/UDR data is communicated from the monitors to an external server (e.g., an "interconnection analysis server" or "IA server"). In a preferred embodiment, one or more applications execute on the IA server to collect information about interconnection services, such as usage amount and quality of interconnection services. That is, one or more applications execute on the IA server to collect CDR and UDR data, from which information about usage and quality of interconnection services may be determined. Preferably, the IA server collects messages on a per customer and/or a per service provider (carrier) basis. The tracked messages may be part of one of a number of message protocols, such as Integrated Services Digital Network - User Part (ISUP), Telephone User Part (TUP), Network User Part (TUP), Transaction Capabilities Application Part (TCAP), Advanced Intelligent Network (AIN), or Integrated Network Application Part (INAP) calls or transactions.

Communications network monitoring equipment which may be used in conjunction with the present invention is disclosed in U.S. Patent No. 5,592,530, entitled TELEPHONE SWITCH DUAL MONITORS; U.S. Patent No. 6,028,914, entitled "SYSTEM AND METHOD FOR MONITORING PERFORMANCE STATISTICS IN A COMMUNICATIONS NETWORK" issued February 22, 2000; and in pending patent applications assigned serial numbers 09/092,256, entitled "SYSTEM AND METHOD FOR GENERATING QUALITY OF SERVICE STATISTICS FOR AN INTERNATIONAL COMMUNICATIONS NETWORK" filed June 5, 1998; 09/092,428, entitled "SYSTEM AND METHOD FOR DETECTING HIGH MESSAGE TRAFFIC LEVELS IN A COMMUNICATIONS NETWORK" filed June 5, 1998; 09/092,699, entitled "SYSTEM AND METHOD FOR SIGNAL UNIT DATA STORAGE AND POST CAPTURE CALL TRACE IN A COMMUNICATIONS NETWORK" filed June 5, 1998; 09/092,771, entitled "SYSTEM AND METHOD FOR CORRELATING TRANSACTION MESSAGES IN A COMMUNICATIONS NETWORK" filed June 5, 1998; 09/093,824, entitled "TRANSACTION CONTROL APPLICATION PART (TCAP) CALL DETAIL RECORD GENERATION IN A COMMUNICATIONS NETWORK" filed June 8, 1998; 09/093,955, entitled "SYSTEM AND METHOD FOR MONITORING SERVICE QUALITY IN A COMMUNICATIONS NETWORK" filed June 8, 1998; and 09/156,328, entitled "SYSTEM AND METHOD FOR MONITORING LINK STATUS IN A COMMUNICATION NETWORK" filed September 18, 1998; the disclosures of which are hereby incorporated herein by reference. These references and the present application are commonly assigned.

It is a feature of one aspect of the present invention to track performance statistics for interconnection services provided in a communications network. A preferred embodiment enables generation of statistical reports which show usage amounts, as well as quality of interconnection services provided by various interconnecting carriers. The reports allow a service provider to verify interconnection usage amounts for which the service provider is billed, and enable service providers to evaluate the quality of interconnection services provided by various interconnecting carriers.

It is another feature of one aspect of the present invention to provide statistical reports for interconnection services in real-time on a network-wide basis for both calls and transactions. Historical data may also be stored to a database for later recall by the user.

The foregoing has outlined rather broadly the features and technical advantages of the present invention in order that the detailed description of the invention that follows may be better understood. Additional features and advantages of the invention will be described hereinafter which form the subject of the claims of the invention. it should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWING

For a more complete understanding of the present invention, reference is now made to the following descriptions taken in conjunction with the accompanying drawing, in which:
FIGURE 1 shows an example of a common scenario requiring interconnection between multiple carriers;
FIGURE 2 shows a further example of a common scenario for interconnection services and settlement for such services;
FIGURE 3 shows an exemplary environment in which a preferred embodiment of the present invention may be implemented;
FIGURE 4 shows a functional block diagram of an exemplary implementation of a most preferred embodiment;
FIGURE 5 shows an example of utilizing a preferred embodiment to verify interconnection usage;
FIGURE 6 shows an example of utilizing a preferred embodiment to verify interconnection quality;
FIGURE 7 shows an example of utilizing a preferred embodiment to verify interconnection services for Intelligent Network services (and signaling transport); and
FIGURE 8 shows an example of utilizing a preferred embodiment to interactively analyze quality and usage verification reports.

### DETAILED DESCRIPTION

To further illustrate a common scenario for interconnection services and settlement of such interconnection services (e.g., compensating interconnecting carriers for their services), attention is directed to the example shown in FIG. 2. The example shown in FIG. 2 illustrates both "adjacent" and "non-adjacent" interconnection services. For instance, a service provider (or carrier) manages network 202, within which network element (e.g., telephone) 204 may request to communicate with network element (e.g., telephone) 212 of network 210 managed by carrier C. As shown in FIG. 2, to enable communication between network element 204 and network element 212, various interconnections may be required. In the example of FIG. 2, for instance, service provider network 202 utilizes interconnecting carrier A's network 206, which interconnects (e.g., switches) to interconnecting carrier B's network 208, which in turn interconnects (e.g., switches) to interconnecting carrier C's network 210 to which network element 212 is communicatively coupled. In this example, interconnecting carrier A is referred to as an "adjacent" carrier, while interconnecting carrier C is referred to as a "non-adjacent" carrier. It should be understood that the service provider may have some control in determining the initial interconnecting carrier to utilize (e.g., interconnecting carrier A in FIG. 2). However, the service provider may have little or no control over determining the interconnecting carrier's utilized thereafter (e.g., interconnecting carrier B).

Various interconnection billing (or "settlement") schemes exist. In a typical adjacent settlement scheme, all interconnection charges are placed on the adjacent carrier. For instance, in an adjacent settlement scheme, the service provider in the example of FIG. 2 is charged interconnecting fees by interconnecting carrier A. Similarly, interconnecting carrier A may be charged a fee for the interconnecting services provided by interconnecting carrier B, and so on. In a typical non-adjacent settlement, all interconnection charges are placed on the originating or terminating carrier (i.e., on the service provider 202 or carrier C 210 of FIG. 2). A preferred embodiment of the present invention enables a service provider to verify invoices (e.g., usage fees) from interconnecting carriers, as well as evaluate the quality of service provided by such interconnecting carriers. A most preferred embodiment allows a service provider to verify invoices and evaluate the quality of service provided by both adjacent and non-adjacent carriers.

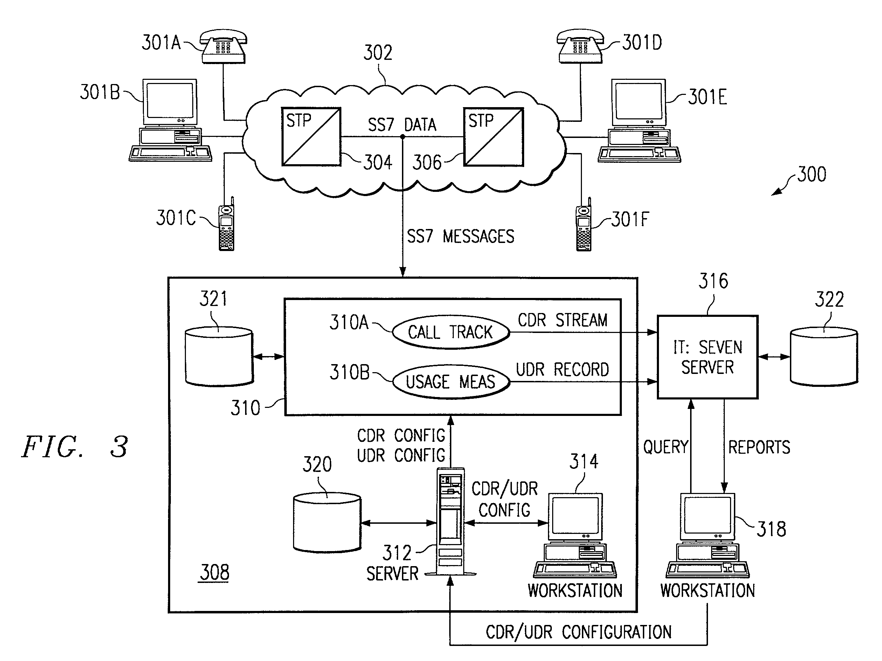

Turning to FIG. 3, an exemplary environment 300 in which a preferred embodiment of the present invention may be implemented is shown. As shown, signaling network (e.g., SS7 Network) 302 allows for data to be passed between various elements, such as STPs 304 and 306. More specifically, environment 300 may include various communication devices (e.g., network elements), such as standard telephone 301_{A}, processor-based computer device (e.g., PC, laptop, or PDA) 301_{B}, or wireless communication device (e.g., cellular telephone) 301_{C}, which communicate via signaling network (e.g., SS7 Network) 302 with other communication devices, such as standard telephone 301_{D}, processor-based computer device (e.g., PC, laptop, or PDA) 301_{E}, or wireless communication device (e.g., cellular telephone) 301_{F}. It should be understood that the communication devices 301 are used for illustration purposes only and that any voice or data communications device may be communicatively coupled to signaling network 302. In a preferred embodiment, communication devices, such as telephones 301_{A} and 301_{D}, are communicatively coupled to end offices (not shown), which may be Signaling Points (SPs) or SSPs. Such end offices are linked to each other through signaling network 302 comprised of STPs, such as STPs 304 and 306 that are connected to each other via communication links.

System 308 is communicatively coupled to signaling network 302 to monitor signaling messages communicated over network 302. That is, system 308 is preferably implemented to detect, capture and correlate signaling data (i.e., signaling units) communicated between STPs via their communication links. Such a system for monitoring signaling messages may be implemented as more fully described in U.S. Patent No. 5,592,530 and the patent applications incorporated herein by reference. It should be understood that signals (or messages) may take any of a number of paths across the communication links between various STPs, and such signals may be detected, captured, and correlated for a particular call as disclosed more fully in the references incorporated herein by reference. As is well known in the art, in certain circumstances, such as for an 800 number call or for a call to an exchange or number that has been ported to a different switch, messages may be sent to an SCP (not shown) to perform various database look-up functions. Signals or messages are exchanged with such a SCP via communication links, as with the exchange between various STPs. Of course, in various implementations, additional components may be included within signaling network 302, such as Service Nodes (SN) or Intelligent Peripherals (IP), which would be communicatively coupled within signaling network 302 with communication links (or "signaling paths").

In the exemplary implementation of FIG. 3, system 308 comprises one or more monitors, such as monitor 310, each of which is individually paired with STPs of network 302 (e.g., STPs 304 and 306). Each of such monitors is coupled to every link for a particular STP by connections, which may be embodied as a branch or tee off of the STP links. This allows such monitors to capture or detect every signaling unit that is sent to, or from, each STP 304, 306. As described in U.S. Patent Nos. 5,592,530 and 6,028,914, such monitors may be coupled via an inter-monitor communications link (not shown) which allows the monitors to transfer captured signaling units and messages among themselves. Typically, the first monitor to detect a signaling unit for a call or transaction is designated as a controlling or anchor monitor. The other monitors then send any later detected signaling units for the same transaction or call to the anchor monitor. The anchor monitors correlates all of the messages from a particular transaction or call into a single record. Usually, each signaling unit is identified as belonging to a particular transaction by the Transaction Identifier (TID). In a preferred embodiment, monitor(s) 310 are capable of monitoring several hundred SS7 links at one time.

The monitors of system 308 (e.g., monitor 310) are communicatively coupled to server 312 over, for example, a Wide Area Network (WAN) or any other data network connection. Once a call or transaction record is complete, the record is then sent to server 312 for further processing. Monitors may determine that a record is complete when an end message is detected for that particular call or transaction. Workstation 314 is communicatively coupled to server 312 and provides network service providers or other users with access to retrieve data or to configure server 312 and/or the monitors (e.g., monitor 310).

Server 312 is coupled to data storage device 320, and monitor(s) 310 are coupled to data storage device 321. It should be recognized that such data storage devices 320 and 321 are intended to encompass any suitable data storage device now known or later developed, including without limitation disk drives, floppy disks, optical disks, Compact Discs (CDs), Digital Versatile Discs (DVDs), and other data storage devices. Data storage devices 320 and 321 may be used to store configuration and profile data for use by the monitoring system 308. Monitor(s) 310 may use data storage device 321 to store call or transaction records or other message data. Alternatively, records and messages may be routed to server 312 for storage on a central database, such as data storage device 320.

In a preferred embodiment of the present invention, monitor(s) 310 filter the correlated messages and the call and transaction records to generate a CDR data stream (shown as functional block 310_{A} in FIG. 3), as well as a UDR record (shown as functional block 310_{B} in FIG. 3), which are communicated to server 316 (which may be referred to as an "interconnection analysis server" or "IA server") via a communication link therebetween. Most preferably, server 316 is a server that, due to the high volume of data that may be communicated to it, is an independent, dedicated server. An example of such a server is an IT:Seven server from Inet Technologies, Inc. Although not shown in FIG. 3, in a most preferred embodiment, each monitor 310 of system 308 is communicatively coupled to server 316 by a connection (e.g., via a communication network), which allows CDR/UDR data to be sent directly to server 316. Alternatively, server 312 may collect all of the CDR/UDR data, or server 312 may perform the record screening function itself, and forward the CDR/UDR information to server 316 via a communication link (e.g., via a communication network) between such servers. Once such CDR/UDR information is received by server 316, it may be stored in data storage device 322, which is intended to encompass any suitable data storage device now known or later developed, including without limitation disk drives, floppy disks, optical disks, Compact Discs (CDs), Digital Versatile Discs (DVDs), and other data storage devices.

Preferably, users can access server 316 from workstation 318, which is communicatively coupled thereto, to query the server and generate reports therefrom. That is, server 316 is capable of reporting statistics on the CDRs/UDRs when requested by a user. Workstations 314 and 318 may be any suitable processor-based computer devices, including without limitation personal computer (PC), laptop computer, or personal data assistant (PDA). As also shown in FIG. 3, workstation 318 may be communicatively coupled to server 312 to allow network service providers or other users with access to retrieve data or to configure server 312 and/or the monitors (e.g., monitor 310).

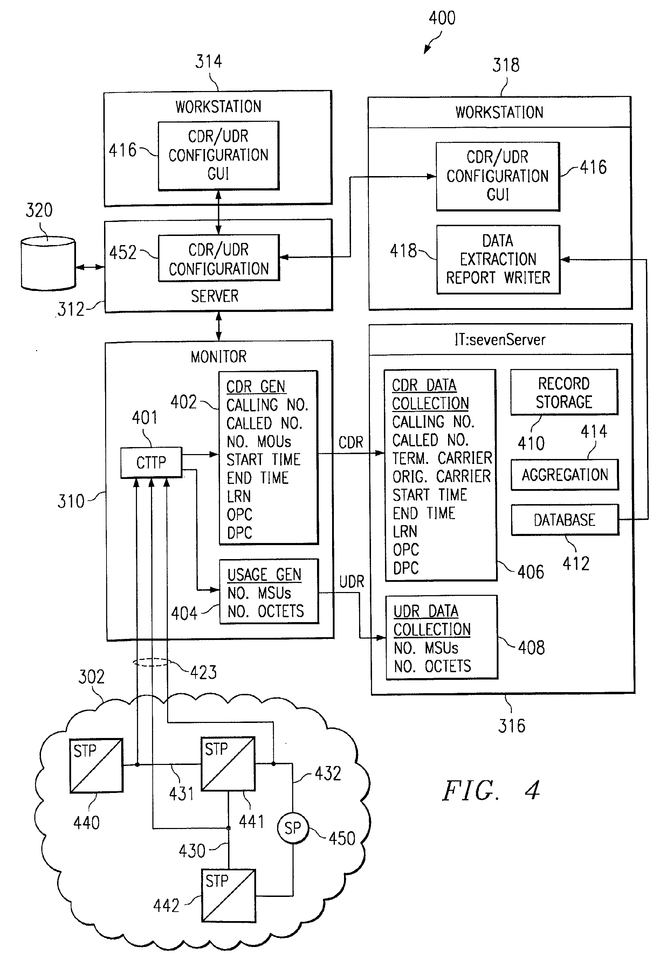

Turning to FIG. 4, a functional block diagram 400 of an exemplary implementation of a most preferred embodiment is shown. As shown, monitor 310 generates CDR data (shown in block 402) and UDR data (shown in block 404). As shown, much information may be contained within a CDR, including data identifying the calling number, called number, number of minutes of use (MOU), start time, end time, LRN, the origination pointcode of a call (OPC), and the destination pointcode of a call (DPC). As also shown, additional information may be contained within a UDR, including data identifying the number of message signaling units (MSUs) and the number of Octets.

The creation of CDR data streams may be performed in various manners, an example of which is described in co-pending and commonly assigned U.S. patent application serial number 09/093,824 entitled "TRANSACTION CONTROL APPLICATION PART (TCAP) CALL DETAIL RECORD GENERATION IN A COMMUNICATIONS NETWORK," the disclosure of which is hereby incorporated herein by reference.

TABLE 1 provides an exemplary list of parameters that can be used to create CDR profiles.

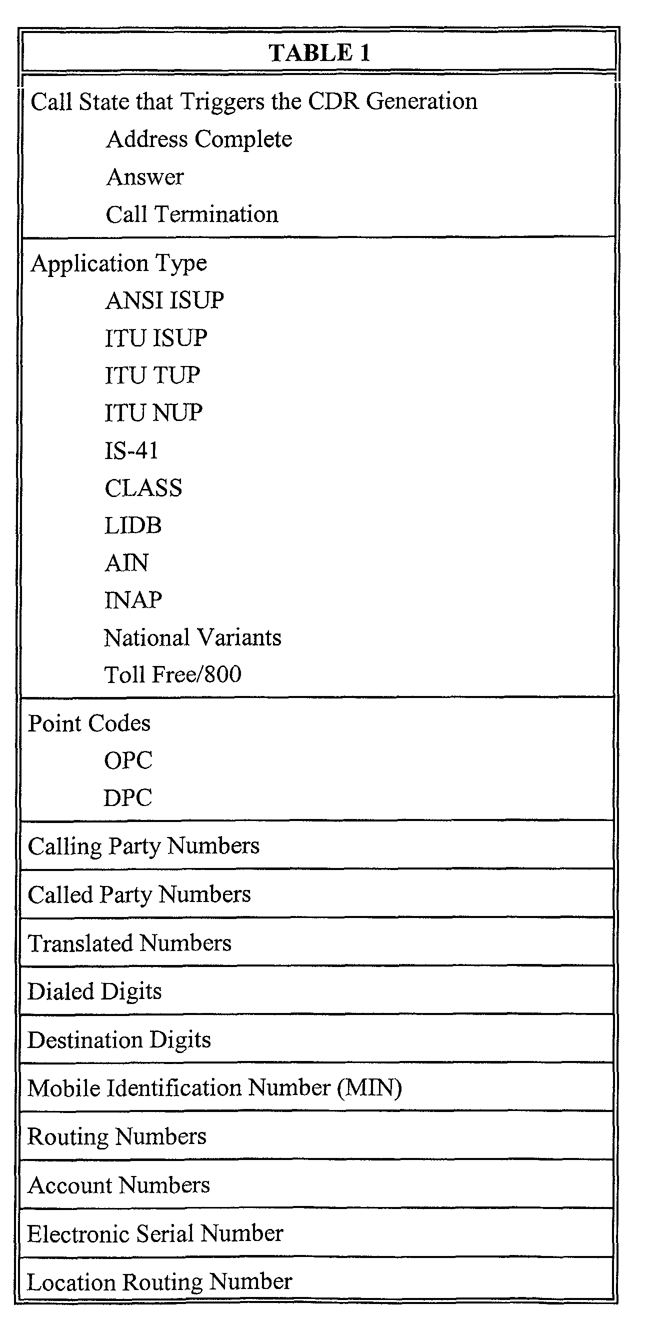

TABLE 2 lists fields that are included within a preferred CDR format and the definitions of the field contents.

**TABLE 2**

| | |
|---|---|
| Start Time (IAM time) | Transaction start time. |
| ACM Time | Address Complete Message time. |
| ANS Time | Answer time. |
| REL Time | Release time. |
| END Time (RLC time) | Transaction end time. |
| CIC | Carrier Identification Code |
| OPC | Origination Pointcode of the call. |
| DPC | Destination Pointcode of the call. |
| Release Cause | Cause of release of call. |
| Number of Calling Party Digits | The number of digits in the calling party number. |
| Calling Party Number | The phone number identified as the calling phone number. |
| Number of Called Party Digits | The number of digits in the called party number. |
| Called Party Number | The phone number identified as the called phone number. |
| Original Called Digits | The original digits called when utilizing Local Number Portability. |
| LRN | Location Routing Number, which is a routing number that identifies the terminating switch for a ported directory number. |
| JIP | Jurisdiction Information Parameter. |
| Failed Calls Flag | Indicates a failed call. |
| Abnormal Release Flag | Indicates an abnormal release of a call. |
| Timeout Flag (Reason) | Indicates a timeout (and reason for the timeout) for a call. |

Of course, additional information may be included within a CDR, including without limitation the additional field contents described in TABLE 2 of co-pending and commonly assigned U.S. patent application serial number 09/093,955 entitled "SYSTEM AND METHOD FOR MONITORING SERVICE QUALITY IN A COMMUNICATIONS NETWORK," the disclosure of which is hereby incorporated herein by reference.

TABLE 3 lists the user defined fields of a preferred CDR format and the definitions of the field contents.

**TABLE 3**

| | |
|---|---|
| User Fields Length | Indicates the length of the user-defined CDR fields section. The value is the number of bytes after this field to the end of the user defined fields. |
| MSU Fields Length | Indicates the total length of the MSU section. The value is the number of bytes after this field to the end of the CDR. |
| Number of MSUs | Indicate the total number of the MSUs in this CDR. |
| Time Stamp | GMT time, when this transaction was encountered. |
| Link Number | Indicates the link identifier on which the MSU was encountered. |
| MSU Length | Indicates the total length of the MSU following. |
| MSU | Actual MSU that was captured by the monitoring system. |

Table 4 lists the fields for a CDR format with Integrated Services Digital Network - User Part (ISUP) parameters.

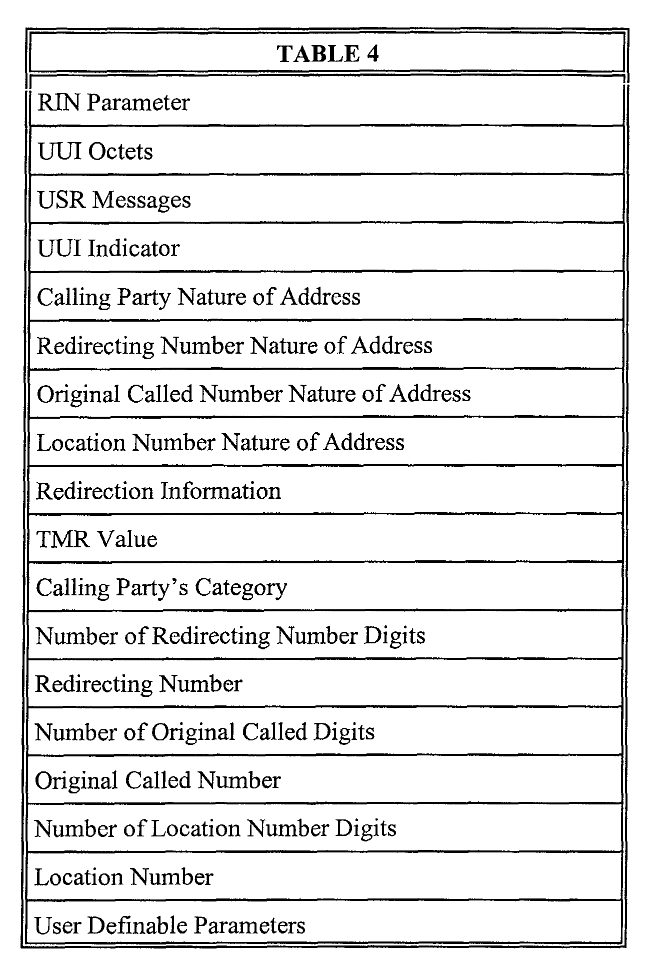

Describing FIG. 4 in greater detail, FIG. 4 illustrates environment 400 having CDR applications running on the components of a monitoring network (including one or more monitors 310) and having data collection applications running on external server 316 to allow interconnection usage and quality reports to be requested and viewed on workstation 318. Components of FIG. 4 are numbered to correspond with like components of FIG. 3. Monitor 310 is capable of monitoring several hundred SS7 links at one time. Monitor links 423 capture messages from network links, such as links 430, 431 and 432 communicatively coupling STPs 440, 441, and 442 and SP 450, in the SS7 network 302. The messages are provided to a call/transaction processing application, such as Call/Transaction Tracking Processor (CTTP) 401. Monitor 310 comprises a number of versatile processors which may be assigned to process and correlate calls, transactions, or other messages. One or more of these processors run CTTP application 401 depending upon the volume of message traffic received from the SS7 network 302. As discussed above, monitor 310 communicates with other monitors (not shown), and exchanges messages pertaining to the calls and transactions that are being monitored.

Monitor 310 also comprises CDR application 402 and UDR application 404, which each may run on another processor. CDR application 402 and UDR application 404 receive correlated message records from CTTP application 401, and CDR application 402 filters the records using a CDR profile, while UDR application 404 generates a UDR record stream. Ideally, CDR application 402, as well as UDR application 404, receive complete records for each call and transaction from CTTP application 401. However, depending upon the state of a particular call or transaction, partial records may be provided. CDR application 402 collects messages for call legs and generates a CDR. The CDR contains summary information of the statistics for each call. Application 402 generates a binary CDR stream that is sent to external server 316 via, for example, Transmission Control Protocol/Internet Protocol (TCP/IP) for further processing. Similarly, application 404 generates a binary UDR stream that is sent to external server 316 via, for example, TCP/IP for further processing. There may be one or more external servers 316 coupled to the monitoring network or to individual monitors. In a preferred embodiment, monitor 310 sends the CDR/UDR data to the external server 316 listed in a CDR/UDR profile.

Typically, the CDR/UDR data is not stored on monitor 310. The binary CDR/UDR data is streamed to a server (e.g., server 312 of FIG. 3 and/or external server 316) as soon as it is created. A unique identifier is created for each CDR so that external server 316 can distinguish among the CDRs that are received from various monitors. Messages that are received out of sequence by CTTP application 401 are sent to CDR application 402, which attaches the out of sequence message to the CDR data stream. Similar operation may be performed for creating the UDR data stream.

Monitoring system server 312 is responsible for tracking all CDR/UDR configurations that have been set up by users. CDR/UDR configuration application 452 cooperates with CDR/UDR configuration application 416 on workstation 314 to provide a user interface to configure the CDR/UDR profiles. Most preferably server 312 stores the CDR/UDR profiles as files in memory 320. The profiles are downloaded to monitors 310 as necessary so that the monitors will have the proper configuration to process the correlated message records.

Users configure the CDR/UDR profiles, and other monitoring system parameters, using workstation 314. As shown, workstation 318 may be implemented with a CDR/UDR application 416 to provide a user interface to configure the CDR/UDR profiles utilizing workstation 318. CDR/UDR configuration application 416, which may be a Graphical User Interface (GUI), allows users to configure CDR/UDR profiles for storage on server 312. CDR/UDR profile information provided by users on workstation 314 and/or workstation 318 is stored as a configuration file in database 320. Most preferably, sever 312 downloads the configuration file data to specific monitors 310 over Simple Network Management Protocol (SNMP). Thus, in a most preferred embodiment, users may modify the CDR/UDR profile configurations, and changes to old configurations are relayed to the appropriate monitors 310.

External server 316 is preferably a dedicated server for the quality assurance application because of the high volume of data associated with the call and transaction records. CDR/UDR data streams from monitors, such as CDR/UDR data streams communicated from monitor 310, is processed by CDR collection application 406 and UDR collection application 408. Database 412 holds the collected CDR/UDR data for external server 316. Collection applications 406 and 408 collects CDR/UDR data from monitor(s) 310 and stores the data to database 412. This data may later be recalled by a service provider using workstation 318. Workstation 318 provides the user interface for querying database 412 and receive reports therefrom through query/report writer application 418, which preferably provides a GUI. Users can query database 412 for interconnection data (e.g., usage data and/or quality data) via GUI 418. Record storage 410 stores CDR and other call related information. In the exemplary implementation of Fig. 4, database 412 is communicatively accessible by workstation 318, while record storage 410 is not. Of course, in various alternative implementations both database 412 and record storage 410 may be communicatively accessible by workstation 318, and in certain implementations database 412 and record storage 410 may be combined in a single data storage device.

Depending upon the user's system, databases 320 and 412 may be an integral part of servers 312 and 316, or such databases may be embodied as separate storage devices. Furthermore, it should be recognized that the functionality of workstations 314 and 318 may be included on a single workstation for interacting with servers 312 and 316. Additionally, in alternative implementations, the functionality of servers 312 and 316 may be implemented on a single server. In one embodiment, servers 312 and/or 316 may be implemented as web servers that allow a user to access such servers using a web browser application executing on workstations 314 and/or 318. For example, in one embodiment, server 316 is implemented as a web server such that a user may utilize a web browser executing on workstation 318 to query database 412 and obtain reports for interconnection usage and/or quality.

The amount of data stored and the message traffic volume are the key determinants of the size and processing power of server 316. Processing capabilities can be adjusted on a per user basis. A redundant server having additional capacity may also be used. In a preferred embodiment, server 316 collects CDR/UDR data from monitor(s) 310 and extracts statistical information to be stored in database 412. Preferably, CDRs/UDRs for calls in an SS7 network are available upon call completion. In a most preferred embodiment, CDR data collection application 406 and UDR data collection application 408 accumulate the messages statistics upon completion of the call or transaction and adds the statistics to database 412 at intervals based upon the origination time of the call or transaction. Accordingly, in a most preferred embodiment, the statistics are continually collected and stored to database 412, but they are reported only upon user request.

The format used to store the statistics data (which includes interconnection statistics data) in database 412 is highly configurable and may be adapted for any storage configuration that the user may desire. For example, in one embodiment, separate data entries are made for each hour in a daily table in database 412. Thus, if server 316 and database 412 are configured to hold a week's worth of statistical data, then seven daily tables, each having 24 intervals, are stored on database 412. Each daily table is stored for seven days. Daily tables are summarized into weekly tables at the end of seven days. Weekly tables have seven intervals, each interval representing a summarized daily table. Weekly tables are stored for 90 days, at which point they are summarized into monthly tables having 28-31 intervals. Monthly tables are stored locally on database 412 as long as space permits. The aging and summarizing process can be customized by users to comply with individual requirements.

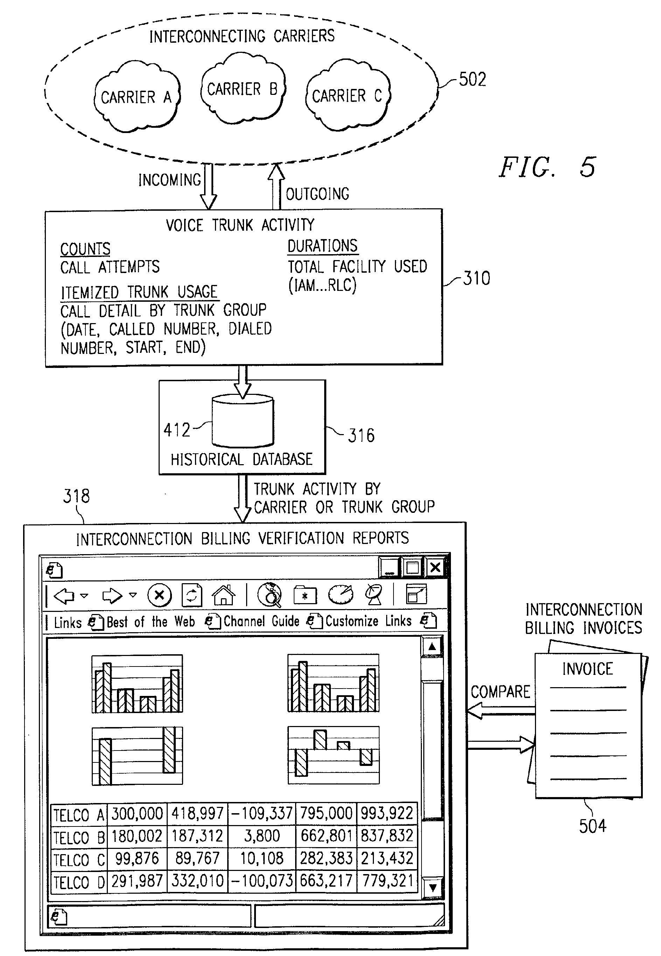

FIG. 5 illustrates an example of how a preferred embodiment may be utilized to verify interconnection usage. As shown, signaling data for various interconnecting carriers 502 (e.g., carrier A, carrier B, and carrier C) may be captured by one or more monitors 310. As an example, in a telephony network, monitor 310 may monitor voice trunk activity for the interconnecting carriers. For instance, monitor 310 may capture signaling data from which various information may be determined, including the number of call attempts requiring interconnecting services from a carrier, as well as duration of the use of an interconnecting carrier's facility. Such captured signaling data may allow usage detail to be determined for each trunk group, such as date used, called number, dialed number, start of usage, and end of usage. As further shown in FIG. 5, this captured information may then be communicated from monitor 310 to server 316 and stored in historical database 412.

Thereafter, a service provider may utilize workstation 318 to request reports of data stored in historical database 412. Thus, for example, a service provider may request an interconnection billing verification report that shows trunk activity by carrier or by trunk group over a desired period of time. Accordingly, the service provider can compare the usage data for a particular carrier, as provided by the billing verification report, with the usage for which the service provided was billed on an invoice 504 from the particular carrier. A preferred embodiment allows a service provider to ensure (or verify) that invoices received for interconnection services are accurate by allowing the service provider to independently document the amount of usage of each interconnecting carrier's voice trunks (e.g., number of minutes, seconds, or even milliseconds each interconnecting carrier's voice trunks are used). A preferred embodiment allows a user to generate reports based on voice trunk usage in various formats, ranging from summary reports to detailed reports. For example, usage can be reported for a particular interconnecting carrier or particular trunk group, and a service provider may view the amount of usage over various time periods (e.g., months, weeks, days, hours) or even on a call-by-call basis. A service provider can define the reporting time period for each interconnecting carrier independently so that reports generated for comparison to monthly invoices from other carriers will be synchronized, for example.

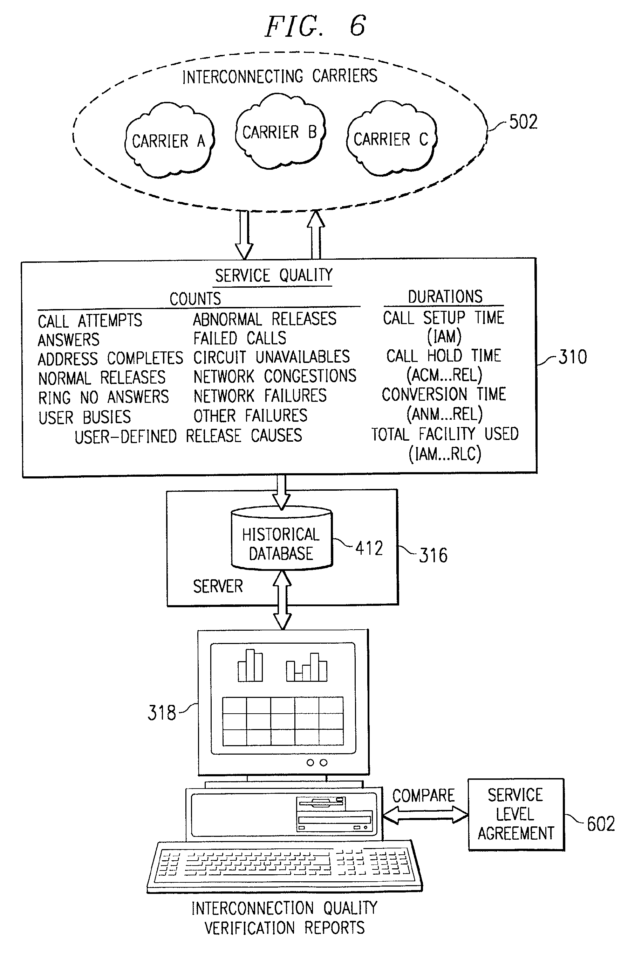

Turning to FIG. 6, an example of how a preferred embodiment may be utilized to verify interconnection quality is shown. As shown, signaling data for various interconnecting carriers 502 (e.g., carrier A, carrier B, and carrier C) may be captured by one or more monitors 310. For instance, monitor 310 may capture signaling data from which various information about the quality of an interconnecting service may be determined, including the number of call attempts requiring interconnecting services from a carrier, the number of answers, the number of address completes, the number of normal releases, the number of "ring no answers," the number of user busies, the number of abnormal releases, the number of failed calls, the number of circuit unavailables, the number of network congestions, the number of network failures, the number of other failures, and the number of user-defined release causes. Such captured signaling data may also allow duration information to be determined, such as duration of call setup time, call hold time, conversion time, and the duration of total facility usage. As further shown in FIG. 6, this captured information may then be communicated from monitor 310 to server 316 and stored in historical database 412.

Thereafter, a service provider may utilize workstation 318 to request reports of data stored in historical database 412. Thus, for example, a service provider may request an interconnection quality verification report that shows interconnection service quality by carrier or by trunk group over a desired period of time. Accordingly, the service provider can compare the quality data for a particular carrier, as provided by the quaiity verification report, with the quality of service agreed to in a service level agreement 602 for the particular carrier. Therefore, a preferred embodiment allows a service provider to determine how well calls are handled by interconnecting carriers (e.g., terminating and transport carriers) and compare their performance against other carriers. A preferred embodiment allows a service provider to monitor its own performance to ensure that the quality of services it offers remains above negotiated levels to avoid pressure or penalties from other carriers. Additionally, a preferred embodiment allows a service provider to monitor the performance of other carriers to determine whether such carriers are performing satisfactorily. With such quality of service information, a service provider may decide to route more of its calls (or other communication "traffic") to the carriers that provide the best quality, or may attempt to negotiate better usage rates from the carriers providing lower performance.

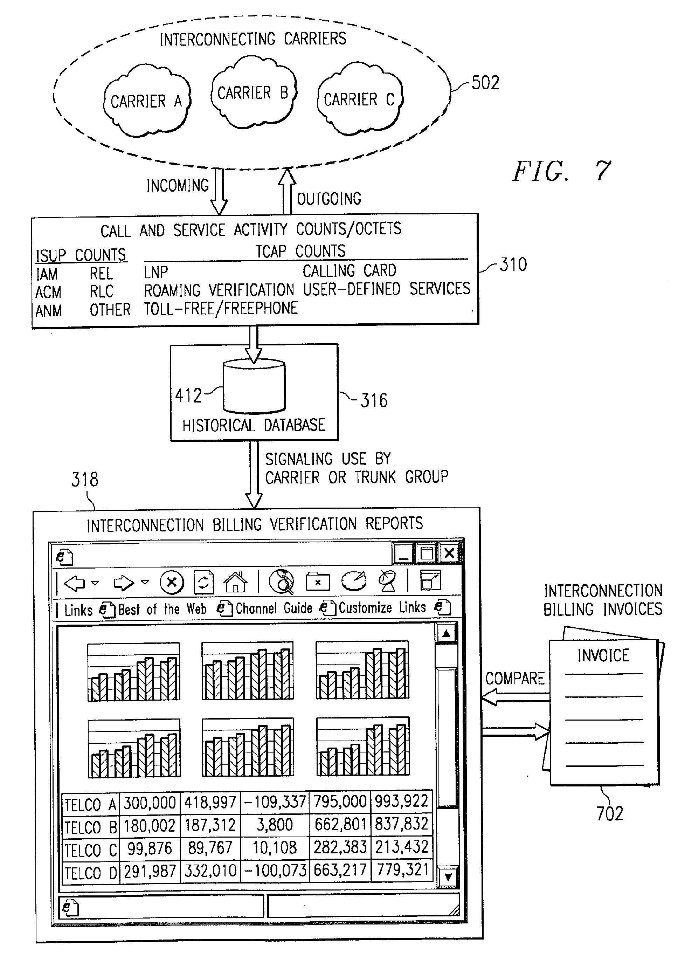

Turning to FIG. 7, an example of how a preferred embodiment may be utilized to verify interconnection services for Intelligent Network services (and signaling transport) is shown. As shown, signaling data for various interconnecting carriers 502 (e.g., carrier A, carrier B, and carrier C) may be captured by one or more monitors 310. For instance, monitor 310 may capture signaling data from which various information about Intelligent Network services usage may be determined, including ISUP (Integrated Services Digital Network - User Part) counts for IAM, ACM, ANM, REL, and RLC. Such captured signaling data may also allow for determination of TCAP (Transaction Capabilities Application Part) counts for LNP, roaming verification, toll-free/freephone, calling card, and user-defined services. As further shown in FIG. 7, this captured information may then be communicated from monitor 310 to server 316 and stored in historical database 412.

Thereafter, a service provider may utilize workstation 318 to request reports of data stored in historical database 412. Thus, for example, a service provider may request an interconnection billing verification report that shows interconnection signaling usage by carrier or by trunk group over a desired period of time. Accordingly, the service provider can compare the Intelligent Network services usage for a particular carrier, as provided by the billing verification report, with the interconnection billing invoice 702 for the particular carrier. Therefore, a preferred embodiment allows a service provider to verify received invoices for Intelligent Network services usage, as well as provide supporting documentation to justify its own outbound invoices for Intelligent Network Services. In a preferred embodiment, server 316 may generate a report detailing the number of Message Signal Units (MSUs) or types of MSUs and the number of octets (bytes) transmitted or received. Furthermore, in a preferred embodiment, call setup and termination signaling usage is tracked through counts of ISUP signaling traffic, while Intelligent Network services are tracked through counts of TCAP signaling traffic.

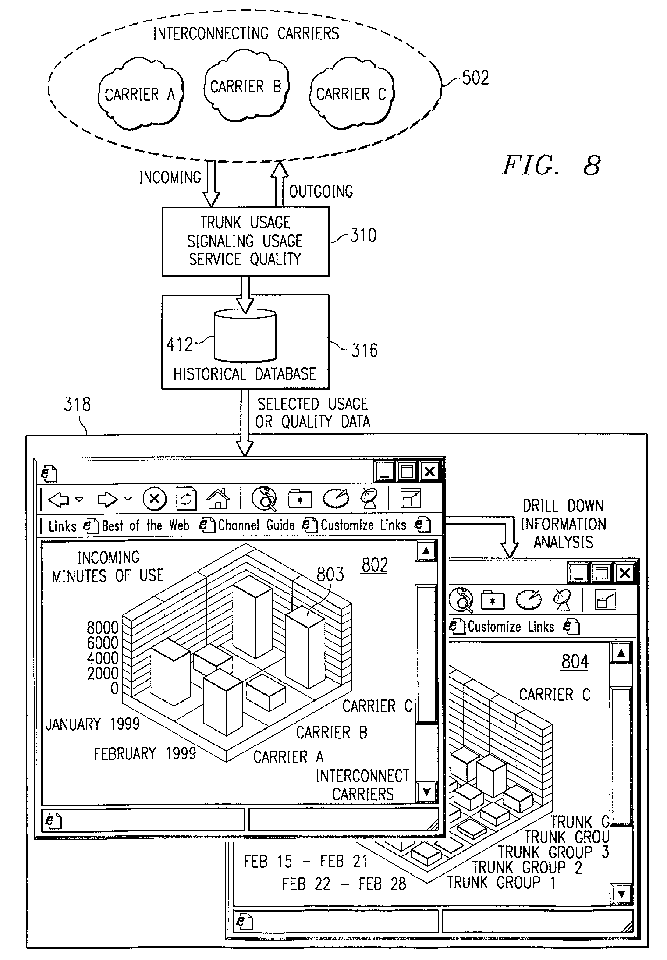

Turning to FIG. 8, an example of how a preferred embodiment may be utilized to allow a service provider to interactively analyze quality and usage verification reports is shown. As shown, signaling data for various interconnecting carriers 502 (e.g., carrier A, carrier B, and carrier C) may be captured by one or more monitors 310. For instance, monitor 310 may capture signaling data from which various information about trunk usage, signaling usage (e.g., for Intelligent Network services), and service quality may be determined. As further shown in FIG. 8, this captured information may then be communicated from monitor 310 to server 316 and stored in historical database 412.

Thereafter, a service provider may utilize workstation 318 to request various reports of data stored in historical database 412, such as billing verification and quality verification reports. For example, a user may interactively request a particular report for one or more carriers (or trunk groups) over a particular period of time (e.g., yearly, monthly, weekly, daily, etcetera). In a preferred embodiment, once a report is generated, a service provider may interactively "drill down" into information provided in the report to obtain greater information. For example, as shown in FIG. 8, a report 802 showing "incoming minutes of use" for carriers A, B, and C for the months of January, 1999 and February, 1999 may be provided on workstation 318 responsive to a service provider's request for such report. Thereafter, the service provider may "drill down" into particular data provided on report 802 to obtain greater detail. For example, suppose the service provider wants to know more information about the minutes of use for carrier C for the month of February, 1999, the service provider may click a pointer device (e.g., mouse) on the block of data 803 provided in report 802 for carrier C for the month of February, 1999. As a result, report 804 may be generated and presented on workstation 318 showing more detailed information about minutes of use for carrier C for the month of February, 1999 (e.g., divided by various trunk groups and by 7-day periods. Of course, to obtain a further detailed view, the service provider may "drill" further into the data provided in report 804.

In a most preferred embodiment, quality and usage verification reports can be generated from the historical database using Cognos Impromptu executing on workstation 318. Alternatively, server 316 may be implemented as a web server, and the quality and usage verification reports may be generated through a web browser executing on workstation 318 by accessing such web server 316.

It should be recognized that the tracked messages may be part of one of a number of message protocols, such as Integrated Services Digital Network - User Part (ISUP), Telephone User Part (TUP), Network User Part (TUP), Transaction Capabilities Application Part (TCAP), Advanced Intelligent Network (AIN) or Integrated Network Application Part (INAP) calls or transactions.

Table 5 provides an exemplary list of statistics that may be stored to database 412 for each CDR profile.

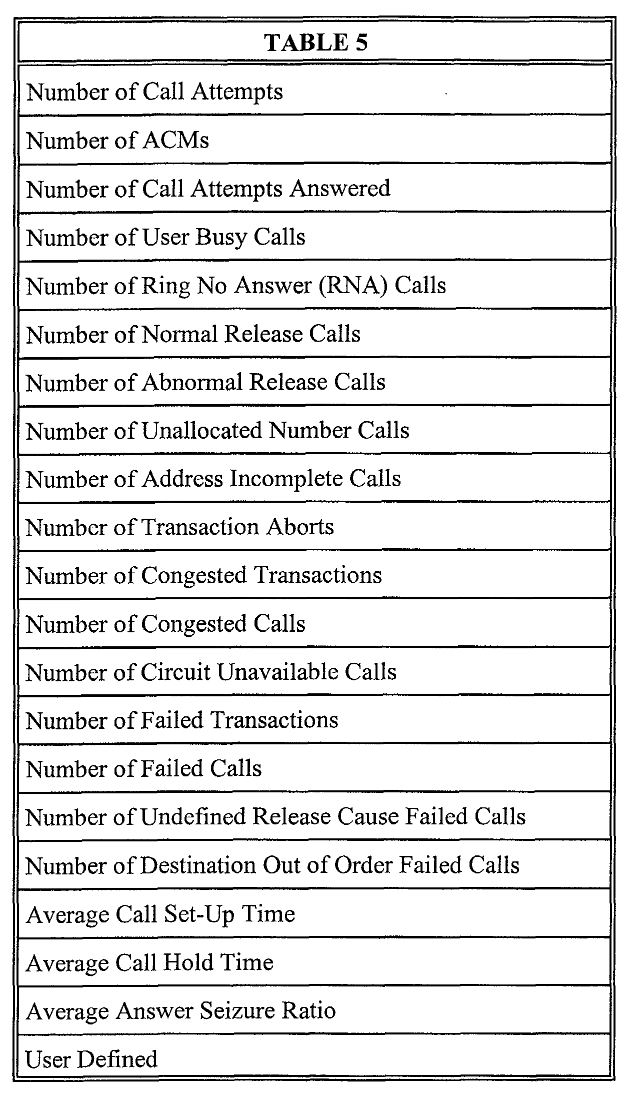

Of course, additional statistics may be included within database 412, and any such additional statistics are intended to be within the scope of the present invention. Preferably, the user can define specific statistics, such as release causes, that are to be stored for a particular CDR profile.

In a preferred embodiment, a user may utilize workstation 318 to request a report of various statistics from database 412, including without limitation average set-up time, average hold time, average conversation time, answer seizure ratio, answer bid ratio (ACM/all call attempts), total facility used (RLC time - IAM time), release causes/total call attempts ratio, and total number of calls with release cause other than that selected by the user.

In a preferred embodiment, all CDR/UDR records are aggregated, by aggregation application 414 (shown in Fig. 4), into a single record over a given duration before insertion into database 412. In a most preferred embodiment, the following aggregation key is available: Origination and Terminating Carriers (CDRs/UDRs). Table 6 provides an exemplary list of aggregations that can be used to group the above statistics for reports to be generated by report application 418 (shown in Fig. 4).

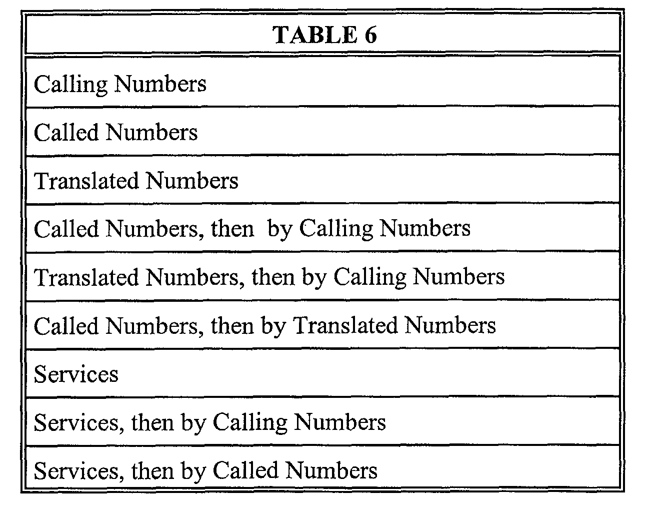

In Table 6 it will be understood that called, calling or translated numbers may be either a complete telephone number or a partial telephone number. For example, under the North American Numbering Plan, reports may be created for full telephone numbers (i.e. 1-NPA-NXX-XXXX). Alternatively, wildcards can be used at the end of the grouping telephone number so that statistics are reported for all calls or transactions directed to a particular area code (i.e. 1-NPA) or a particular exchange code (i.e. 1-NPA-NXX).

Most preferably, users can also utilize report GUI 418 to create their own query parameters. Queries can be stored in database 412 and stored queries can be modified. Generated reports may be displayed to the user on workstation 318. Alternatively, reports may be printed, directed to an electronic mail address, stored to a database file, or exported to an ASCII file. Users can configure weekly, monthly, or other periodic reports which are sent at intervals to specific users. Such periodic reports may be assigned to report application 418 (or to a reporting application executing on server 316) to be run automatically.

Dynamic behavioral statistics may also be generated by report application 418. Users can select to have the statistics of Table 5 reported as to the highest and/or lowest values. For example, a report may comprise the 16 highest interconnection carriers used, or the 16 highest number of circuit unavailable calls, for example. Preferably, behavioral statistics are retrieved using a Structured Query Language (SQL) query. Triggers can be configured to update a user's display according to changes in database 412. Once a group or aggregation of statistics is displayed, users can refine the report to obtain more specific data, such as a specific area code and exchange.

Additionally, in a preferred embodiment, users may track statistical events about interconnection services by designating statistics to be displayed based upon a first occurrence, an occurrence that is more than some delta away from a certain value, or rising/falling thresholds. When triggered, events may be displayed to the user, or stored to a log file.

Users may also designate specific link sets or network nodes to be used for the statistical reports. Only those monitors that are coupled to the relevant links and nodes will receive the CDR/UDR profile data and only those monitors will send CDRs/UDRs to external server 316 for that profile.

Real-time statistics may also be generated by report application 418 (or a reporting application executing on server 316). Statistics are then updated after call or transaction completion and CDR generation. Displayed reports may be in the form of peg counts, bar graphs, or trend curves. Users may also configure reports based upon a sample of the calls or transactions or based upon a sample of the CDRs/UDRs. The sampling rate may be selected using CDR/UDR configuration GUI 416.

It will be understood that workstations 314 and 318 may be separate components as described herein, or one workstation may be used to run both CDR/UDR configuration GUI 416 and interconnection report GUI 418.

It will also be understood that in a preferred embodiment the external server 316 (which may be referred to as an "interconnection analysis server" or "IA server") can accept CDR/UDR data from any source, not only from the monitoring system. For example, a switch or end office may generate CDRs/UDRs and provide the data directly to the external server 316 for further processing. Preferably, external server 316 has a modularized front end which allows it to receive data from any source.

Although the above embodiments have been described with respect to an SS7 system , it will be understood that the present invention may be adapted to monitor the quality of service provided on any communications network, including as examples wireline and/or wireless data, voice, and multimedia networks.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A method for gathering performance data for interconnection services performed in a communication network, said method comprising:
capturing signaling data on a signaling network;
from the captured signaling data, generating performance data related to interconnection services provided in the communication network; and
communicating said performance data to a server for storage thereon.

2. The method of claim 1 wherein said generating performance data comprises:
generating call detail record data that includes data about interconnection services.

3. The method of claim 2 wherein said call detail record data includes data identifying at least one from the group consisting of: calling number, called number, number of minutes of use (MOU), start time, end time, LRN, origination pointcode of a call (OPC), and destination pointcode of a call (DPC).

4. The method of claim 2 wherein said call detail record data includes data identifying a plurality of the group consisting of: Start Time (IAM time), ACM Time, ANS Time, REL Time, END Time (RLC time), CIC, OPC, DPC, Release Cause, Number of Calling Party Digits, Calling Party Number, Number of Called Party Digits, Called Party Number, Original Called Digits, LRN, JIP, Failed Calls Flag, Abnormal Release Flag, and Timeout Flag (Reason).

5. The method of claim 1 wherein said performance data includes data identifying one or more of the following:
number of call attempts, number of ACMs, number of call attempts answered, number of user busy calls, number of ring no answer (RNA) calls, number of normal release calls, number of abnormal release calls, number of unallocated number calls, number of address incomplete calls, number of transaction aborts, number of congested calls, number of circuit unavailable calls, number of failed transactions, number of failed calls, number of undefined release cause failed calls, number of destination out of order failed calls, average call set-up time, average call hold time, and average answer seizure ratio.

6. The method of claim 1 wherein said signaling network includes a plurality of signal transfer points (STPs), and wherein said signaling data is captured from data communicated from one of said plurality of STPs to another of said plurality of STPs.

7. The method of claim 1 wherein said communication network includes one or more selected from the group consisting of:
public switched telephone network (PSTN), wireline network, wireless network, voice network, data network, general purpose processor-based information network, cable network, wide area network (WAN), the Internet, or any combination thereof.

8. The method of claim 1 wherein said performance data includes data about at least one selected from the group consisting of: usage of said interconnection services, quality of said interconnection services, and usage of said interconnection services for intelligent networks.

9. The method of claim 1 wherein said interconnection services include:
an interconnecting carrier providing resources to interconnect a service provider's network to another network or network element.

10. The method of claim 1 wherein said interconnection services include:
providing network resources to a communication service provider to enable said communication service provider to communicatively couple a first network element to a second network element.

11. The method of claim 10 wherein said network resources includes switching resources.

12. A method for providing verification of performance of interconnection services, said method comprising:
gathering data related to of interconnection services provided in a communication network by capturing signaling data for said interconnection services on a signaling network; and
providing said performance data to one or more communication service providers.

13. The method of claim 12 wherein said signaling network includes a plurality of signal transfer points (STPs), and wherein said signaling data is captured from data communicated from one of said plurality of STPs to another of said plurality of STPs.

14. The method of claim 12 wherein said providing said performance data to one or more communication service providers further comprises:
allowing said one or more service providers to query a server having said performance data stored thereon to retrieve desired performance data about said interconnection services.

15. The method of claim 12 wherein said interconnection services include:
an interconnecting carrier providing resources to interconnect a service provider's network to another network or network element.

16. The method of claim 12 wherein said interconnection services include:
providing network resources to a communication service provider to enable said communication service provider to communicatively couple a first network element to a second network element.

17. A system comprising:
communication network over which at least one of data or voice can be communicated;
signaling network over which signaling data for said communication network is communicated;
at least one processor-based monitor for capturing signaling data from said signaling network, wherein said signaling data includes performance data for interconnection services provided on said communication network; and
at least one server to which said performance data for interconnection services are communicated from said at least one processor-based monitor, wherein said at least one server is communicatively accessible by a user to enable said user to retrieve said performance data.

18. The system of claim 17 wherein said at least one server is communicatively coupled to a communication network such that said user can communicatively access said at least one server via said communication network.

19. The system of claim 17 wherein said at least one processor-based monitor utilizes the captured signaling data to generate call detail records, and wherein said at least one processor-based monitor communicates said call detail records to said at least one server.

20. The system of claim 17 wherein said at least one processor-based monitor utilizes the captured signaling data to generate usage detail records, and wherein said at least one processor-based monitor communicates said usage detail records to said at least one server.

21. A method for providing verification of performance of interconnection services provided in a communication network, wherein a service provider provides desired networking services to a user, and wherein said service provider utilizes interconnection services of at least one interconnecting carrier to provide the desired networking services to said user, said method comprising:
capturing signaling data on a signaling network for said interconnection services of said at least one interconnecting carrier; and
storing to a computer readable media data about the performance of said interconnection services, wherein said data is determined at least in part from the captured signaling data.

22. The method of claim 21 wherein said signaling network includes a plurality of signal transfer points (STPs), and wherein said signals data is captured from data communicated from one of said plurality of STPs to another of said plurality of STPs.

23. The method of claim 21 further comprising:
correlating the captured signaling data.

24. The method of claim 23 wherein said correlating associates signaling data with its respective interconnection services.
